(19) Europäisches Patentamt
European Patent Office
Office européen des brevets

(11) **EP 4 507 188 A1**

(12) **EUROPEAN PATENT APPLICATION**
published in accordance with Art. 153(4) EPC

(43) Date of publication:
**12.02.2025 Bulletin 2025/07**

(21) Application number: 23826021.0

(22) Date of filing: **15.05.2023**

(51) International Patent Classification (IPC):
*H02P 21/14* (2016.01)    *H02P 21/22* (2016.01)

(52) Cooperative Patent Classification (CPC):
**A01D 34/00; A01D 34/66; A01D 34/81;
A01D 69/02; A01G 3/08; B25F 5/00; H02P 21/14;
H02P 21/22; H02P 21/34; H02P 27/06**

(86) International application number:
**PCT/CN2023/094119**

(87) International publication number:
**WO 2023/246372 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.06.2022  CN 202210719094**

(71) Applicant: **Nanjing Chervon Industry Co., Ltd.
Nanjing, Jiangsu 211106 (CN)**

(72) Inventors:
• **LU, Wenjing
Nanjing, Jiangsu 211106 (CN)**
• **XU, Yanqing
Nanjing, Jiangsu 211106 (CN)**

(74) Representative: **Sun, Yiming
HUASUN Patent- und Rechtsanwälte
Friedrichstraße 33
80801 München (DE)**

(54) **ELECTRIC TOOL AND CONTROL METHOD**

(57)    Provided are a power tool and a control method. The power tool includes a mounting portion for optionally mounting one working accessory of multiple working accessories; a motor configured to drive the working accessory mounted on the mounting portion; and a control device configured to control rotation of the motor according to a target control program matching the working accessory. The control device is configured to, when the motor is in a pre-starting stage, estimate rotational inertia of the motor and identify the working accessory currently mounted to the mounting portion based on the rotational inertia.

FIG. 1

## Description

This application claims priority to Chinese Patent Application No. 202210719094.2 filed with the China National Intellectual Property Administration (CNIPA) on Jun. 23, 2022, the disclosure of which is incorporated herein by reference in its entirety.

## TECHNICAL FIELD

The present application relates to a power tool, for example, a control method for a power tool to automatically identify a working accessory.

## BACKGROUND

Power tools are popular in the market. A tool body is a power assembly. The power assembly can match various working assemblies, such as a hedge trimmer, a cultivator, an edger, a snow thrower, a blower, and an electric saw. However, in the related art, when the power assembly is adapted to various working assemblies, different working assemblies cannot be distinguished from each other and are controlled by the same control program to work. As a result, some working assemblies are not in the best working state and have relatively single functions.

## SUMMARY

The present application provides a power tool with a self-detection capability. In an offline state, the power tool can automatically identify a tool head attached to the power tool and start a motor according to a target control program matching the tool head.

The present application provides a power tool. The power tool includes a mounting portion for optionally mounting one working accessory of multiple working accessories; a motor configured to drive the working accessory mounted on the mounting portion; and a control device configured to control the rotation of the motor according to a target control program matching the working accessory. The control device is configured to, when the motor is in a pre-starting stage, estimate the rotational inertia of the motor and identify the working accessory currently mounted to the mounting portion based on the rotational inertia.

The present application further provides a mower. The mower includes a mounting portion for optionally mounting one cutting assembly of multiple cutting assemblies; a motor configured to drive the cutting assembly mounted on the mounting portion; and a control device configured to control the rotation of the motor according to a target control program matching the cutting assembly. The control device is configured to, when the motor is in a pre-starting stage, estimate an electrical parameter of the motor and identify the cutting assembly currently mounted to the mounting portion based on the electrical parameter.

The present application further provides a control method of a power tool. The power tool includes a mounting portion for optionally mounting one working accessory of multiple working accessories; a motor configured to drive the working accessory mounted on the mounting portion; and a control device connected to the motor and configured to control the rotation of the motor. The control method includes the following: in response to receiving a power-on signal of the motor, the control device controls the motor to be in a pre-starting stage, estimates the rotational inertia of the motor, identifies the working accessory currently mounted to a tool body based on the rotational inertia, and controls the rotation of the motor according to a target control program matching the working accessory.

## BRIEF DESCRIPTION OF DRAWINGS

FIG. 1 is a perspective view of a power tool according to an example of the present application.

FIG. 2 is a circuit block diagram of circuitry of the power tool in FIG. 1.

FIG. 3 is a system schematic diagram of a software control portion of the circuitry in FIG. 2.

FIG. 4 is a physical model diagram of a Y-shaped three-phase electric motor.

FIG. 5 is a physical model diagram of d and q axes of the three-phase electric motor in FIG. 4.

FIG. 6 is a flowchart of a control method of the power tool in FIG. 1.

FIG. 7 is a perspective view of a power tool according to an example of the present application.

FIG. 8 is another perspective view of the power tool in FIG. 7.

FIG. 9 is a flowchart of a control method of the power tool in FIG. 7.

FIG. 10 are graphs of waveforms of the rotational speed of an electric motor of the power tool in FIG. 7.

## DETAILED DESCRIPTION

The present application is described below in detail in conjunction with drawings and examples. It is to be understood that the examples described herein are merely intended to illustrate the present application. Additionally, it is to be noted that for ease of description, only part, not all, of structures related to the present application are illustrated in the drawings.

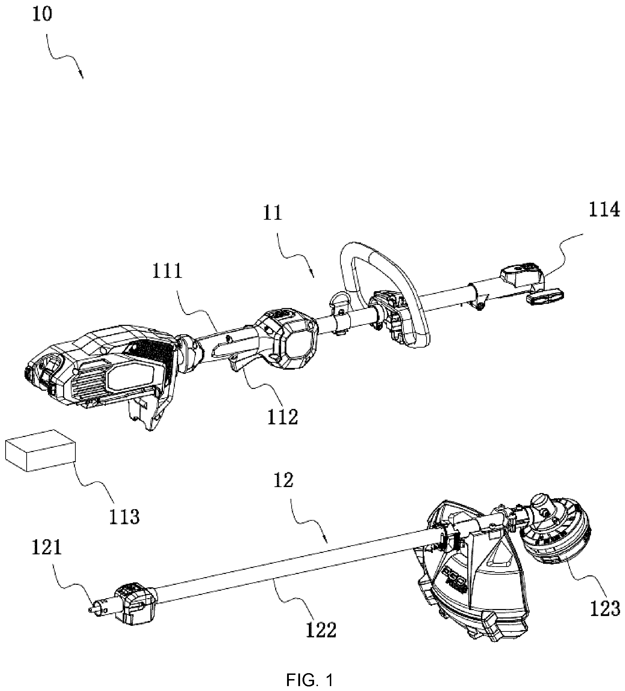

FIG. 1 shows a power tool 10 as an example. The power tool 10 is a multi-head tool. Optionally, the power tool 10 includes a tool body 11 and a working accessory. The tool body 11 includes a grip 111, an operating switch 112, a power supply device 113, and a mounting portion 114. A user optionally connects different working accessories to the tool body 11 through the mounting portion 114 so that the power tool 10 can implement different functions. FIG. 1 illustratively shows two working accessories, which are a working accessory 12a and a working accessory 12b respectively. Optionally, when the working accessory 12a is mounted to the tool body 11, the power tool 10 is a handheld string trimmer. The working accessory 12a includes a connecting portion 121, a connecting rod 122, and a working head 123. The working accessory 12a can be connected to the mounting portion 114 of the tool body 11 through the connecting portion 121, thereby implementing a function of a multi-head power tool. When the working accessory 12b is mounted to the tool body 11, the power tool 10 is a pole saw. It is to be noted that in the present application, the working accessory may be a string trimming assembly or a hedge trimming assembly shown in FIG. 1 or a cultivating assembly, an edging assembly, a snow shoveling assembly, a blowing assembly, or an electric saw assembly. It is to be understood that different working accessories can be mounted on the tool body 11 to implement different functions. For example, the hedge trimming assembly may be mounted to trim branches, the blowing assembly nay be mounted to blow fallen leaves, or the string trimming assembly may be mounted to cut grass. In the present application, not only is a structural connection between the working accessory and the tool body 11 implemented by the mounting portion 114 and the connecting portion 121 through a mechanical structure (such as a buckle), but also an electrical connection between the tool body 11 and the working accessory is implemented by connecting terminals provided in a first connecting portion 114 and a second connecting portion 121.

The power supply device 113 in the tool body 11 may be a battery pack or an alternating current. The tool body 11 is powered by the power supply device 113. In some examples, the power supply device 113 outputs the alternating current. In some examples, the power supply device 113 outputs a direct current. The power supply device 113 may be the battery pack detachably mounted to the tool body 11.

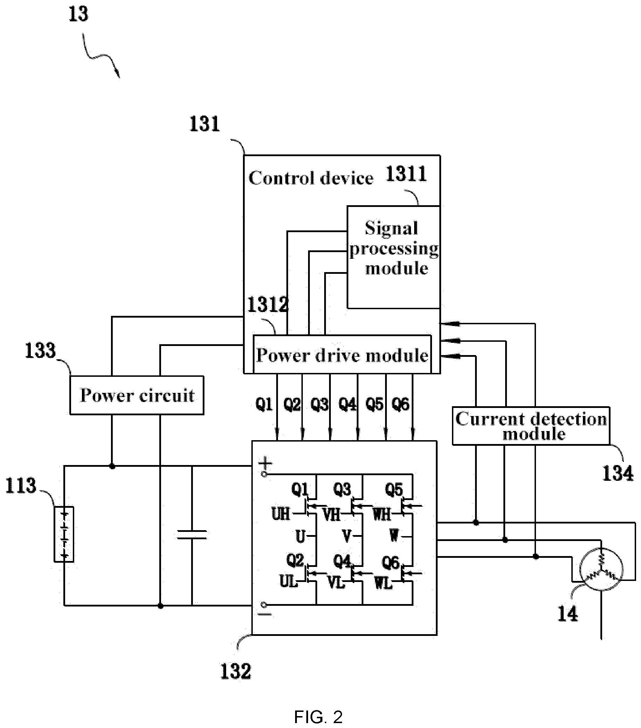

The operation of the power tool 10 also depends on circuit components or electronic components. Referring to FIG. 2, the power tool 10 further includes circuitry 13. Optionally, the circuitry 13 includes a control device 131, a driver circuit 132, a power circuit 133, and a current detection module 134. The control device 131, the driver circuit 132, the power circuit 133, the current detection module 134, and the power supply device 113 are electrically connected to a motor 14 to form a drive system of the motor 14. In this example, the motor 14 is configured to be an electric motor.

Optionally, the current detection module 134 is configured to acquire a working current of the motor 14. The working current may be a bus current or a phase current. The power circuit 133 can be electrically connected to the power supply device 113 to convert electrical energy from the power supply device 113 into electrical energy usable by the power tool 10. The power circuit 133 is electrically connected to the control device 131 and can supply power to at least the control device 131.

The control device 131 is electrically connected to the driver circuit 132 to output drive signals to control the driver circuit 132 to work. In some examples, the control device 131 adopts a dedicated control chip (such as a microcontroller unit (MCU)). The control device 131 includes a signal processing module 1311 and a power drive module 1312. The signal processing module 1311 is configured to process and calculate acquired sampling signals of the working current and has functions such as comparison and determination. After processing signals, the signal processing module 1311 can generate a control signal and output the control signal to the power drive module 1312. The power drive module 1312 is connected to the signal processing module 1311. The power drive module 1312 can enhance driving capabilities of output signals of the control device 131 to drive the driver circuit 132 to work. The power drive module 1312 may be an external power drive module.

The driver circuit 132 is electrically connected to the control device 131 and the motor 14. The driver circuit 132 can drive the operation of the motor 14 according to control signals outputted from the power drive module 1312 in the control device 131. The driver circuit 132 is electrically connected to three-phase windings of the motor 14. The driver circuit 132 may include a switching circuit. The switching circuit is configured to drive the running of a rotor of the motor 14 according to the control signals from the control device 131.

To make the motor 14 rotate, the driver circuit 132 has multiple driving states. In a driving state, stator windings of the electric motor generate a magnetic field. The control device 131 is configured to output corresponding drive signals to the driver circuit 132 according to a rotational position of the rotor of the electric motor so that the driver circuit 132 switches the driving state. In this manner, a state of a voltage and/or a current applied to the windings of the motor 14 is changed, and an alternating magnetic field is generated to drive the rotor to rotate so that the electric motor can be driven. Optionally, a rotor position of the motor 14 may be calculated by the signal processing module 1311 in the control device 131 according to the sample current of the motor and/or voltage of the electric motor.

The driver circuit 132 shown in FIG. 2 includes switching elements Q1, Q2, Q3, Q4, Q5, and Q6, and the switching elements Q1, Q2, Q3, Q4, Q5, and Q6 form a three-phase bridge. Q1, Q3, and Q5 are upper bridge switches, and Q2, Q4, and Q6 are lower bridge switches. An upper bridge switch and a lower bridge switch of each phase bridge circuit are connected to the same winding. The switching elements Q1 to Q6 may each be selected from a field-effect transistor, an insulated-gate bipolar transistor (IGBT), or the like. A gate terminal of each switching element is electrically connected to the power drive module 1312 of the control device 131, separately. A drain or source of each switching element is electrically connected to a winding of the electric motor 14. The switching elements Q1 to Q6 change on states according to the drive signals outputted by the control device 131 to change the state of the voltage and/or the current applied by the power supply device 113 to the windings of the motor 14, thereby driving the electric motor 14 to operate.

In this example, the power tool 10 can implement different functions when matching different working accessories. However, in the related art, when the tool body 11 is adapted to various working accessories, different working accessories cannot be distinguished from each other and are controlled by the same control program to work. As a result, some working accessories are not in the best working state and have relatively single functions. The control program refers to a control program for the motor 14.

The present application enables the power tool 10 to automatically acquire a type of the working accessory attached to the tool body 11 in a pre-starting stage of the motor 14 and control the rotation of the motor according to a target control program matching the working accessory. It is to be understood that the pre-starting of the electric motor does not belong to an operation stage of the electric motor. The pre-starting stage of the electric motor may be understood as a stage with no load and not configured to implement the function of the power tool. It is to be understood that when the electric motor is in the pre-starting stage, a current flows through the windings of the electric motor, but the rotor does not rotate. When the electric motor is in the pre-starting stage, the control device controls the electric motor to operate at a low current and a low speed for a preset period of time. The target control program refers to a control program that can make the working accessory in the best working state.

Next, the technical solution where the power tool automatically identifies the working accessory to the tool body in the pre-starting stage of the electric motor and controls the rotation of the electric motor according to the corresponding target control program is described in detail.

Common parameter identification for the electric motor includes online parameter identification and offline parameter identification. The online parameter identification mainly relies on schemes based on voltage equations. Of course, there are some other methods, such as direct current signal injection and harmonic detection of a speed or a back electromotive force. Since most online identification methods in the related art rely on fundamental frequency voltage equations, a parameter of the electric motor is difficult to identify at a low or zero current or at a low or zero rotational speed. In addition, parameter coupling in the voltage equations also affects an identification result.

In the present application, the working accessory attached to the tool body can be automatically identified by an offline parameter identification method, the target control program is called or set according to the identified tool accessory, and the rotation of the electric motor is controlled based on the target control program. In some examples, the target control program is pre-stored in the power tool and can be directly called. In some other examples, the target control program cannot be directly called. After an electrical parameter of the electric motor in the pre-starting stage is acquired, the target control program is generated or some key parameters in the target control program are set, and then the rotation of the electric motor is controlled according to the target control program. In this example, the electrical parameter of the electric motor includes the resistance, inductance, rotational inertia, flux linkage, and other parameters of the electric motor. Methods for acquiring the resistance, inductance, rotational inertia, and flux linkage in the present application are described hereinafter in detail. It is to be noted that offline identification in the present application refers to that the control device executes a parameter test program to inject a current into the electric motor and identifies the mounted working accessory offline according to a sampled electrical parameter of the electric motor before the starting of the motor of the power tool.

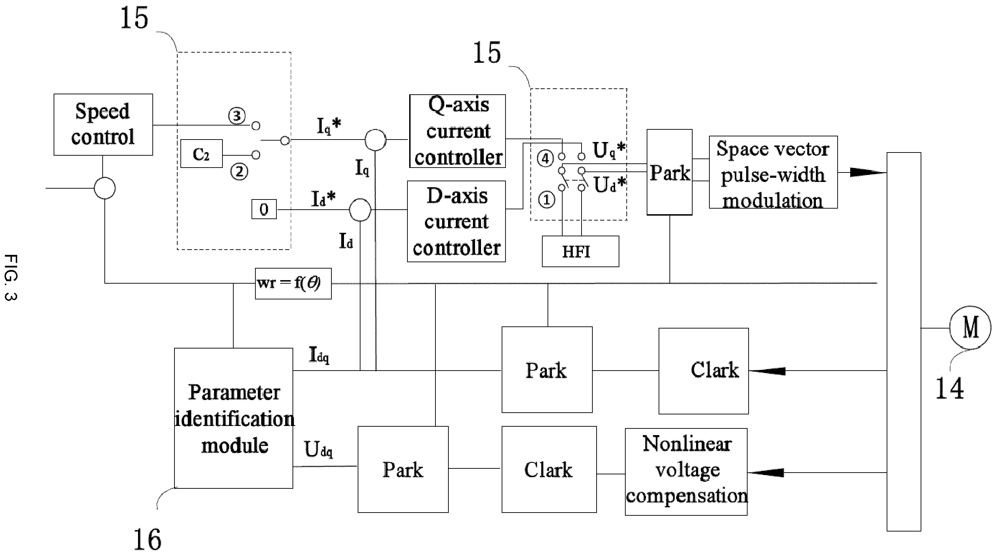

FIG. 3 is a control block diagram of the offline parameter identification for the electric motor. A state switching unit 15 has three switching states: when a switch is shifted to ①, it is a resistance and inductance measurement mode; when switches are shifted to ②④, it is a rotational inertia measurement mode; when switches are shifted to ③④, it is a flux linkage measurement mode. The working principle of a parameter identification module 16 is described below in detail. The present application proposes a parameter identification method based on a high-frequency equivalent impedance model of d and q axes of a permanent-magnet synchronous motor with high-frequency signals injected. The resistance, d-axis inductance, q-axis inductance, flux linkage, and rotational inertia of the electric motor can be identified offline by the method.

Optionally, the resistance and inductance measurement mode refers to the identification of the resistance, d-axis inductance, and q-axis inductance in the pre-starting stage of the motor. Generally, the resistance is determined by a linear regression model, with a linearly increased current injected into the d axis. The inductance is identified through the injection of a high-frequency sinusoidal alternating current signal. When the switch is shifted to ①, the motor is controlled in a current open-loop mode, and high-frequency voltage signals Uq* and Ud* are injected by using high-frequency injection (HIF) technology to obtain high-frequency current signals. After current and voltage sampling, nonlinear voltage compensation, and angle transformation, Udq and Idq that change sinusoidally are obtained and processed in the parameter identification module 16 to obtain the resistance and the inductance.

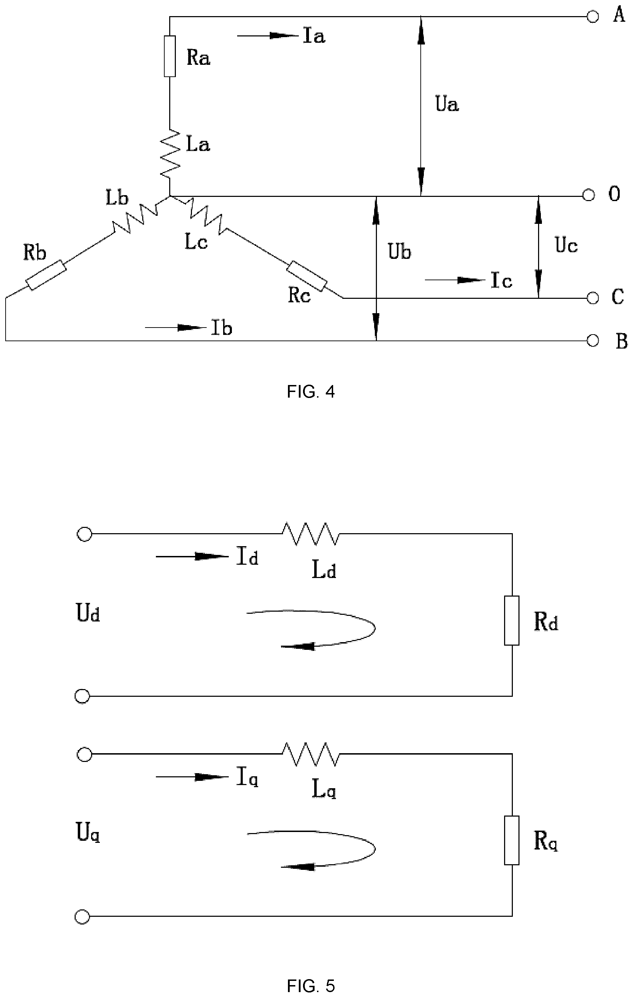

As shown in FIG. 4, using a Y connection as an example, each phase winding of the motor may be regarded as a combination of an ideal resistor and an ideal inductor in series, forming an impedance model shown in FIG. 4. After coordinate transformation, a physical model of the d and q axes shown in FIG. 5 can be obtained. In FIGS. 4 and 5, Ua, Ub, and Uc denote a phase voltage of phase A, a phase voltage of phase B, and a phase voltage of phase C respectively, Ia, Ib, and Ic denote a phase current of phase A, a phase current of phase B, and a phase current of phase C respectively, La, Lb, and Lc denote phase inductance of phase A, phase inductance of phase B, and phase inductance of phase C respectively, and Ra, Rb, and Rc denote phase resistance of phase A, phase resistance of phase B, and phase resistance of phase C respectively. Rd and Rq denote d-axis resistance and q-axis resistance respectively. Ld and Lq denote the d-axis inductance and the q-axis inductance respectively, Ud and Uq denote a d-axis voltage and a q-axis voltage respectively, and Id and Iq denote a d-axis current and a q-axis current respectively.

In this example, the resistance and the inductance of the motor may be estimated by the following formula (1):

$$\begin{cases} L_x = \dfrac{U_{xh}}{\omega_x I_{xh}} \sin(\theta_{xu} - \theta_{xi}) & x = d, q \\ R_x = \dfrac{U_{xh}}{I_{xh}} \cos(\theta_{xu} - \theta_{xi}) & x = d, q \end{cases} \tag{1}.$$

In the above formula (1), $L_x$ denotes the d-axis inductance or the q-axis inductance, $R_x$ denotes the d-axis resistance or the q-axis resistance, $\omega_x$ denotes an angular frequency of the injected high-frequency sinusoidal alternating current signal, and $\theta_{xu}$-$\theta_{xi}$ denotes a phase difference between voltage and current of the injected high-frequency sinusoidal alternating current signal. It is to be understood that if the injected high-frequency sinusoidal alternating current signal has a fixed frequency, the above phase difference remains unchanged. $U_{xh}$ denotes the amplitude of the voltage of the high-frequency sinusoidal alternating current signal, and $I_{xh}$ denotes the amplitude of the current.

When the switches are shifted to ③④, the motor is controlled in a current-speed dual closed-loop mode to acquire the flux linkage of the electric motor. In this example, the electric motor is controlled to rotate at a fixed rotational speed, and three phase voltages and currents are collected after stabilization. Udq and Idq are obtained after nonlinear voltage compensation, Clarke transformation, and Park transformation. Then, the flux linkage is estimated by the parameter identification module 16 according to a q-axis voltage equation and the identified resistance and inductance.

After the high-frequency sinusoidal alternating current signal is injected through HFI, the parameter identification unit 16 acquires the resistance $R_d$, resistance $R_q$, inductance $L_d$, and inductance $L_q$ of the electric motor by the above formula (1). Next, based on the acquired resistance and inductance, the parameter identification unit 16 estimates the flux linkage $\varphi_m$ of the electric motor by the following formula (2):

$$\varphi_m = \frac{U_q - R_q I_q - \omega L_d I_d}{\omega} \tag{2}.$$

In formula (2), $\omega$ denotes an electrical angular velocity. When the switches are shifted to ③④, the motor is controlled in the current-speed dual closed-loop mode. The fixed rotational speed is set, and the three phase voltages and currents are collected after stabilization. $U_q$, $U_d$, $I_q$, and $I_d$ are obtained after nonlinear voltage compensation, Clarke transformation, and Park transformation. Then, the flux linkage of the electric motor can be estimated by the above formula (2) in conjunction with $R_q$ and $L_d$ acquired by the above formula (1).

When the switches are shifted to ②④, the electric motor is controlled in a current closed-loop mode to acquire the rotational inertia of the electric motor. When the motor is in the pre-starting stage, a current loop is controlled to give a current instruction to estimate the rotational inertia of the motor. The current loop is controlled by a vector control method. The current instruction includes a first current and a second current. The first current and the second current have the same magnitude and opposite directions, and the first current and the second current are both less than the rated current of the motor.

In this example, the rated current of the electric motor is I and the rated speed of the electric motor is n. Optionally, a current Iq* is configured to be x times the rated current I, and the current Iq* is positive in direction. When the speed of the electric motor increases to y times the rated speed n, the direction of the current Iq* is changed to be negative. Then, the speed of the electric motor decreases linearly. When the speed of the electric motor reaches z times the rated speed n, the direction of the current Iq* is changed to be positive. Then, the speed of the electric motor increases linearly. When the speed of the electric motor reaches y times the rated speed n, the direction of the current Iq* is changed to be negative. The cycle is repeated. One complete change cycle is taken and the rotational inertia is derived according to a mechanical motion equation. For example, x has a value of 0.1, y has a value of 0.3, and z has a value of 0.2. It is to be understood that values of x, y, and z are not constant and may be set by those skilled in the art.

The methods for the parameter identification module 16 to acquire the resistance, inductance, flux linkage, and rotational inertia of the electric motor have been described above in detail. Of course, the preceding methods for acquiring the electrical parameters of the electric motor are merely illustrative. Those skilled in the art can estimate the electrical parameters of the electric motor by other calculation methods.

After the electric motor is energized, the control device controls the electric motor to be in the pre-starting stage. It is to be noted that the pre-starting stage and a starting stage of the electric motor are essentially different. When the electric motor is in the pre-starting stage, the electric motor has a relatively low rotational speed and a relatively small current. It is to be understood that after the electric motor is powered on, the control device controls the electric motor to be in the pre-starting stage, acquires the target control program adapted to the current working accessory, and controls the rotation of the electric motor based on the acquired target control program.

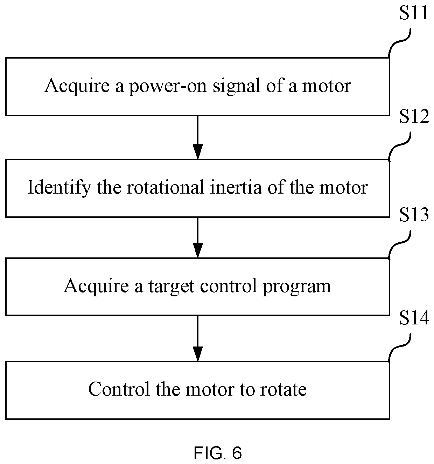

A control method of the power tool in this example, that is, the multi-head power tool, is described below with reference to FIG. 6. The method includes the steps below.

In S11, a power-on signal of the motor is acquired.

When the user needs to operate the power tool to implement a function, the user operates a switch. After receiving the power-on signal from the switch, the control device controls the motor to enter the pre-starting stage.

In S12, the rotational inertia of the motor is identified.

Of course, other electrical parameters of the motor may also be estimated, including the resistance, inductance, and flux linkage of the electric motor. The methods for acquiring the above electrical parameters in the technical solutions of the present application have been described above in detail.

In S13, the target control program is acquired.

The target control program matching the acquired electrical parameter of the motor is called or generated. When the motor driving a different working accessory is pre-started, the electrical parameter of the motor is different. A type of the working accessory attached to the tool body can be identified according to the acquired electrical parameter so that the adapted target control program is given.

In S14, the control device controls, based on the target control program, the drive motor to start.

In this example, when different working accessories are attached to the tool body 11, such as the hedge trimming assembly, the cultivating assembly, the edging assembly, the snow shoveling assembly, the blowing assembly, and the electric saw assembly, the rotational inertia of the motor is significantly different. As an implementation, the control device may adapt the target control program based on the acquired rotational inertia to drive the motor to rotate.

In some examples, the control device can detect, based on the acquired resistance and inductance, whether the motor faults currently. In some examples, the control device can detect, based on the acquired flux linkage, whether the motor is demagnetized currently and increase the current of the motor when the motor is demagnetized.

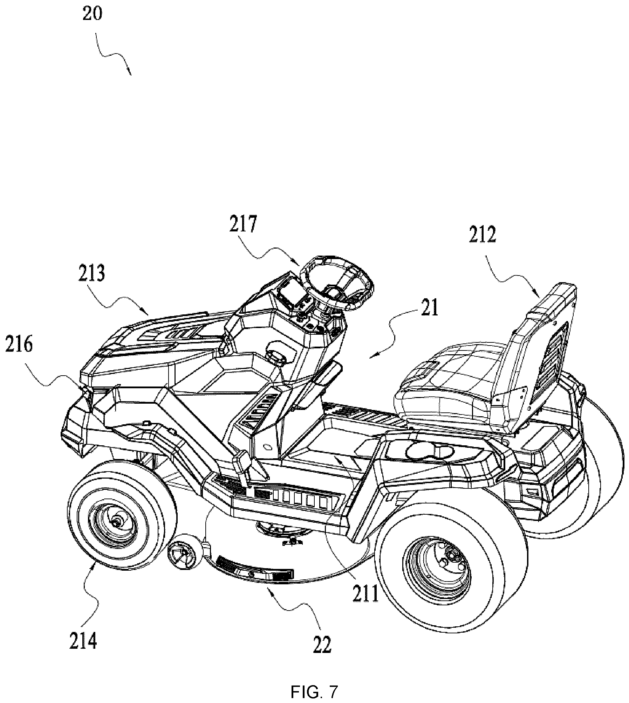

Of course, the preceding method is applicable to not only the power tool in FIG. 1 but also other power tools. FIG. 7 shows another example of the present application, which is specifically a large mower, such as a riding mower or a smart mower.

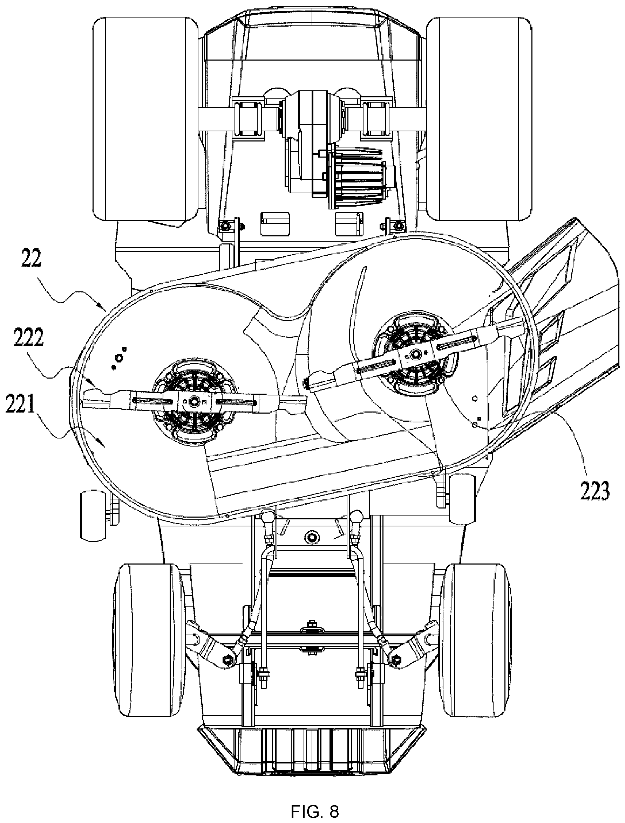

As shown in FIGS. 7 and 8, a riding mowing device is a mower 20 on which a user can sit for operation to mow lawns and other vegetation.

The mower 20 includes a cutting assembly 22, a frame 211, a seat 212, a housing system 213, a traveling assembly 214, a power supply assembly, a lighting system 216, and an operating assembly 217. The frame 211, the seat 212, the housing system 213, the traveling assembly 214, the power supply assembly, the lighting system 216, and the operating assembly 217 constitute a tool body 21 of the mower 20, and the tool body 21 is configured for mounting the cutting assembly 22. The mower 20 provides energy for the cutting assembly 22, the traveling assembly 214, and the lighting system 216 through a power assembly. In this example, the power assembly of the mower 20 is the power supply assembly 217. The power supply assembly 217 provides electrical energy for assemblies of the mower 20 so that the mower 20 can be used as a power tool. The electric mower 40 is more environmentally friendly and more energy-efficient than a fuel-based mower.

The cutting assembly 22 is disposed below the frame 211 and is configured to output power to implement a function of the mower 20. The cutting assembly 22 is detachably mounted to the tool body 21 of the mower 20. Optionally, a mounting portion is formed on the tool body 21, and the cutting assembly 22 is detachably mounted to the mounting portion. Optionally, the cutting assembly 22 includes a disc 221, a mowing element 222, and a first motor 223. The mowing element 222 is configured to cut vegetation when rotating at a high speed. For example, the mowing element 222 is a blade for cutting grass on a lawn. The disc 221 surrounds a mowing space for accommodating at least part of the mowing element 222, that is to say, the mowing element 222 is at least partially accommodated in the disc 221. The first motor 223 is configured to drive the mowing element 222 to rotate. In an example, two mowing elements 222 may be provided and two first motors 223 are provided. Accordingly, the two first motors 223 drive the two mowing elements 222 one to one. Such cutting assembly 22 as described above may be simply referred to as a two-blade cutting assembly. In an example, three mowing elements 222 may be provided and three first motors 223 are provided. Accordingly, the three first motors 223 drive the three mowing elements 222 one to one. Such cutting assembly 22 as described above may be simply referred to as a three-blade cutting assembly. Of course, in some examples, the cutting assembly 22 may be a four-blade cutting assembly or a cutting assembly with more blades according to requirements in actual working conditions and the structure and volume of the mower. In this example, the mower 20 can match different cutting assemblies 22 to implement a cutting function. Optionally, the mower 20 in the present application can match the two-blade cutting assembly or the three-blade cutting assembly. In actual use, the user may select a suitable cutting assembly 22 according to an actual working condition and mount the cutting assembly 22 to the tool body 21, where the cutting assembly 22 is configured to implement the cutting function of the mower 20.

Of course, the mower 20 further includes at least circuitry for controlling the normal rotation of the first motor 223. Of course, similar to that in the preceding examples, the circuitry includes at least a control device, a driver circuit, a power circuit, and other auxiliary circuits, which are not repeated here one by one. It is to be understood that when the mower 20 matches different cutting assemblies 22, to make the working efficiency of different types of cutting assemblies 22 in the best state, the control device 231 controls the first motor 223 by different control programs according to the different types of cutting device 22.

When the user starts to operate the mower 20 for mowing, the control device controls the motor to be in a pre-starting stage. In the pre-starting stage, the motor has a relatively low rotational speed and a relatively small current. It is to be understood that after the motor is powered on, the control device controls the motor to be in the pre-starting stage to acquire an electrical parameter of the motor, adapts a target control program to a current working accessory based on the acquired electrical parameter, and controls the rotation of the motor based on the acquired target control program.

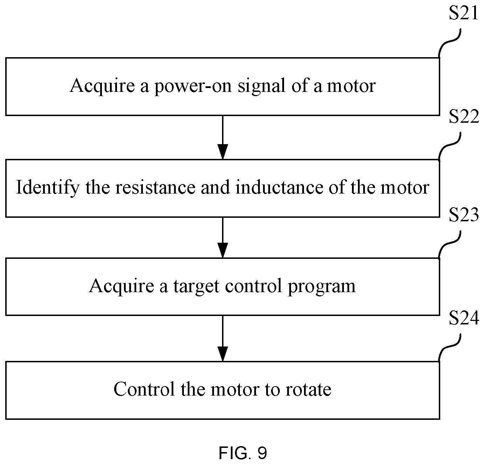

A control method of the power tool in this example, that is, the mower 20, is described below with reference to FIG. 9. The method includes the steps below.

In S21, a power-on signal of the motor is acquired.

When the user needs to operate the power tool to implement the function, the user operates a switch. After receiving the power-on signal from the switch, the control device controls the motor to enter the pre-starting stage.

In S22, the electrical parameter of the motor is identified.

The electrical parameter of the motor includes resistance, inductance, rotational inertia, and flux linkage of the motor. The methods for acquiring the above electrical parameters in the technical solutions of the present application have been described above in detail.

In S23, the target control program matching the acquired electrical parameter of the motor is called or generated.

When the motor drives a different working accessory, the electrical parameter of the motor is different. A type of the working accessory attached to the tool body can be identified according to the acquired electrical parameter so that the adapted target control program is given.

In S24, the control device controls, based on the target control program, the drive motor to rotate.

In this example, when different cutting assemblies 22 are attached to the tool body 21, such as the two-blade cutting assembly and the three-blade cutting assembly, the resistance or the inductance of the motor is significantly different. As an implementation, the control device may adapt the target control program based on the acquired resistance or inductance to control the motor to rotate. Of course, those skilled in the art may use another electrical parameter as a determination basis, such as the rotational inertia or a combination of the rotational inertia and the flux linkage flux, thereby improving the accuracy of determination of a type of the cutting assembly.

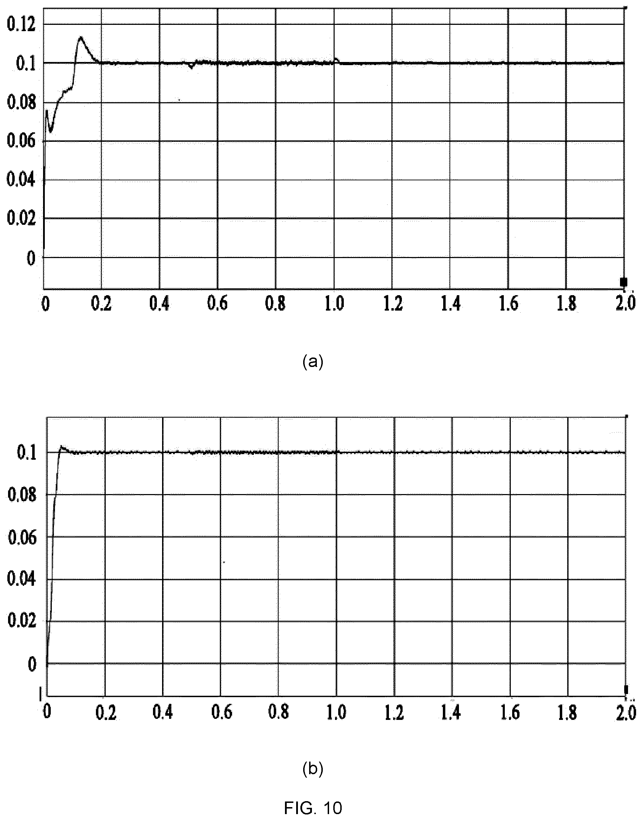

FIG. 10 shows a waveform of the rotational speed of the electric motor in a control manner of manually adjusting a parameter (as shown in FIG. 10A) and a waveform of the rotational speed of the electric motor in the control method of automatically identifying the working accessory in the present application (as shown in FIG. 10B). A horizontal axis represents time and a vertical axis represents the rotational speed of the motor. As can be seen from FIG. 10, the control method of the present application has a better adjustment effect and the electric motor operates more smoothly.

**EP 4 507 188 A1**

Claims

1. A power tool, comprising:

   a mounting portion for optionally mounting one working accessory of a plurality of working accessories;
   a motor configured to drive the working accessory mounted on the mounting portion; and
   a control device configured to control rotation of the motor according to a target control program matching the working accessory;
   wherein the control device is configured to, when the motor is in a pre-starting stage, estimate an electrical parameter of the motor and identify the working accessory currently mounted to the mounting portion based on the electrical parameter.

2. The power tool according to claim 1, wherein the electrical parameter comprises resistance, inductance, rotational inertia, and flux linkage of the motor.

3. The power tool according to claim 1, wherein the control device is configured to, when the motor is in the pre-starting stage, control a current loop to give a current instruction to estimate rotational inertia of the motor.

4. The power tool according to claim 3, wherein the current loop is controlled through vector control.

5. The power tool according to claim 3, wherein the current instruction comprises a first current and a second current, the first current and the second current have a same magnitude and opposite directions, and the first current and the second current are both less than a rated current of the motor.

6. The power tool according to claim 5, wherein the control device is configured to, in a sampling period, give the first current to the motor and acquire a rotational speed of the motor in real time, give the second current to the motor when the rotational speed of the motor is greater than or equal to a first rotational speed, and give the first current to the motor when the rotational speed of the motor is less than or equal to a second rotational speed.

7. The power tool according to claim 6, wherein the first rotational speed is greater than the second rotational speed, and the first rotational speed and the second rotational speed are both less than a rated rotational speed of the motor.

8. The power tool according to claim 6, wherein the control device is configured to, in the sampling period, estimate the rotational inertia of the motor based on the current instruction and the rotational speed of the motor.

9. The power tool according to claim 1, wherein the control device is configured to, when the motor is in the pre-starting stage, control a current loop to give a voltage instruction to estimate resistance or inductance of the motor.

10. The power tool according to claim 9, wherein the voltage instruction is a high-frequency voltage signal or a direct current voltage signal, and the current loop is controlled through vector control.

11. The power tool according to claim 10, wherein the control device is configured to, when the motor is in the pre-starting stage, control a speed loop to give a preset rotational speed and acquire three phase voltages and currents of the motor.

12. The power tool according to claim 11, wherein the control device is configured to estimate flux linkage of the motor based on the three phase voltages and currents, the inductance, and the resistance.

13. The power tool according to claim 1, further comprising a power supply device configured to supply power to the motor.

14. The power tool according to claim 1, wherein the working accessory comprises a string trimmer head, a hedge trimmer head, or a blade cutting assembly.

15. The power tool according to claim 1, wherein the power tool comprises a string trimmer, a hedge trimmer, or a mower.

16. A mower, comprising:

   a blade mounting portion for optionally mounting one blade cutting assembly of a plurality of blade cutting assemblies;
a motor configured to drive the blade cutting assembly mounted on the mounting portion; and
a control device configured to control rotation of the motor according to a target control program matching the blade cutting assembly mounted to the blade mounting portion;
wherein the control device is further configured to, when the motor is in a pre-starting stage, estimate an electrical parameter of the motor and identify the blade cutting assembly currently mounted to the mounting portion based on the electrical parameter.

17. The mower according to claim 16, wherein the electrical parameter comprises resistance, inductance, rotational inertia, and flux linkage of the motor; and the control device is configured to, when the motor is in the pre-starting stage, control a current loop to give a voltage instruction to estimate the resistance or the inductance of the motor.

18. The mower according to claim 16, wherein the blade cutting assembly comprises a two-blade cutting assembly and a three-blade cutting assembly.

19. A control method of a power tool, wherein the power tool comprises:

a mounting portion for optionally mounting one working accessory of a plurality of working accessories;
a motor configured to drive the working accessory mounted on the mounting portion; and
a control device connected to the motor and configured to control rotation of the motor; and
wherein the control method comprises:
in response to receiving a power-on signal of the motor, controlling, by the control device, the motor to be in a pre-starting stage, estimating rotational inertia of the motor, identifying the working accessory currently mounted to a tool body based on the rotational inertia, and controlling the rotation of the motor according to a target control program matching the working accessory.

20. The control method according to claim 19, wherein when the motor is in the pre-starting stage, the control device controls a current loop to give a current instruction to estimate the rotational inertia of the motor, wherein the current loop is controlled by a vector control method.

10

11

114

111

112

113

121

12

122

123

FIG. 1

**13**

**131**

Control device **1311**

Signal processing module

**1312**

**133**

Power drive module

Power circuit

Q1 Q2 Q3 Q4 Q5 Q6

**113**

Current detection module

**134**

Q1 Q3 Q5

UH VH WH

U V W

Q2 Q4 Q6

UL VL WL

**14**

**132**

FIG. 2

FIG. 3

FIG. 4

FIG. 5

S11

Acquire a power-on signal of a motor

S12

Identify the rotational inertia of the motor

S13

Acquire a target control program

S14

Control the motor to rotate

FIG. 6

FIG. 7

FIG. 8

Acquire a power-on signal of a motor — S21

Identify the resistance and inductance of the motor — S22

Acquire a target control program — S23

Control the motor to rotate — S24

FIG. 9

(a)

(b)

FIG. 10

## INTERNATIONAL SEARCH REPORT

| International application No. |
|---|
| **PCT/CN2023/094119** |

### A. CLASSIFICATION OF SUBJECT MATTER

H02P21/14(2016.01)i; H02P21/22(2016.01)i

According to International Patent Classification (IPC) or to both national classification and IPC

### B. FIELDS SEARCHED

Minimum documentation searched (classification system followed by classification symbols)

IPC: H02P

Documentation searched other than minimum documentation to the extent that such documents are included in the fields searched

Electronic data base consulted during the international search (name of data base and, where practicable, search terms used)

CNTXT, ENTXTC, VEN, CNKI, IEEE: 附件, 工具, 割草机, 控制, 马达, 识别, 转动惯量, 电流, 电压, 电阻, 磁链, 矢量, 估算, 启动, attachment, tool, lawn w mower, control+, motor, identifi+, moment, inertia, current, voltage, resistance, flux w linkage, vector, estimat+, activat+, start+

### C. DOCUMENTS CONSIDERED TO BE RELEVANT

| Category* | Citation of document, with indication, where appropriate, of the relevant passages | Relevant to claim No. |
|---|---|---|
| X | US 2015164515 A1 (AESCULAP AG.) 18 June 2015 (2015-06-18) claims 1-5, description, paragraphs 25-32, and figure 1 | 1-15, 19-20 |
| Y | US 2015164515 A1 (AESCULAP AG.) 18 June 2015 (2015-06-18) claims 1-5, description, paragraphs 25-32, and figure 1 | 16-18 |
| Y | CN 114430987 A (POSITEC POWER TOOLS (SUZHOU) CO., LTD.) 06 May 2022 (2022-05-06) description, paragraphs 52 and 94, and figures 1 and 2 | 16-18 |
| X | CN 101558554 A (YASKAWA ELECTRIC CORP.) 14 October 2009 (2009-10-14) description, paragraphs 0081-0087, and figures 1-12 | 1-15, 19-20 |
| A | CN 105856171 A (POSITEC POWER TOOLS (SUZHOU) CO., LTD.) 17 August 2016 (2016-08-17) entire document | 1-20 |
| A | CN 111756280 A (NANJING CHERVON INDUSTRY CO., LTD.) 09 October 2020 (2020-10-09) entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 June 2023** | **23 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/094119** |

| Patent document cited in search report | | | Publication date (day/month/year) | Patent family member(s) | | | Publication date (day/month/year) |
| --- | --- | --- | --- | --- | --- | --- | --- |
| US | 2015164515 | A1 | 18 June 2015 | JP | 2015523158 | A | 13 August 2015 |
| | | | | JP | 6272322 | B2 | 31 January 2018 |
| | | | | BR | 112015000973 | A2 | 27 June 2017 |
| | | | | BR | 112015000973 | B1 | 11 May 2021 |
| | | | | WO | 2014012833 | A1 | 23 January 2014 |
| | | | | DE | 102012106589 | A1 | 23 January 2014 |
| | | | | RU | 2015105812 | A | 10 September 2016 |
| | | | | RU | 2633225 | C2 | 11 October 2017 |
| | | | | US | 9295477 | B2 | 29 March 2016 |
| | | | | EP | 2874547 | A1 | 27 May 2015 |
| | | | | EP | 2874547 | B1 | 27 April 2016 |
| | | | | ES | 2573788 | T3 | 10 June 2016 |
| CN | 114430987 | A | 06 May 2022 | WO | 2022095897 | A1 | 12 May 2022 |
| CN | 101558554 | A | 14 October 2009 | WO | 2008093486 | A1 | 07 August 2008 |
| | | | | JPWO | 2008093486 | A1 | 20 May 2010 |
| | | | | JP | 5151994 | B2 | 27 February 2013 |
| CN | 105856171 | A | 17 August 2016 | CN | 105856170 | A | 17 August 2016 |
| | | | | CN | 105856169 | A | 17 August 2016 |
| | | | | WO | 2016116064 | A1 | 28 July 2016 |
| CN | 111756280 | A | 09 October 2020 | WO | 2020253821 | A1 | 24 December 2020 |
| | | | | CN | 113273078 | A | 17 August 2021 |
| | | | | EP | 3979488 | A1 | 06 April 2022 |
| | | | | US | 2022111737 | A1 | 14 April 2022 |

Form PCT/ISA/210 (patent family annex) (July 2022)

**REFERENCES CITED IN THE DESCRIPTION**

**Patent documents cited in the description**

- CN 202210719094